# FASCICULE DE BREVET EUROPEEN

(11) **EP 0 383 650 B1**
(45) Date de publication et mention de la délivrance du brevet: **07.09.1994**
(21) Numéro de dépôt: 90400319.1
(22) Date de dépôt: 06.02.1990
(51) Int. Cl.: G10K 11/34

(54) **Procédé et dispositif de repérage et de focalisation d'ondes**
Verfahren und Vorrichtung zum Orten und Fokussieren von Wellen
Process and apparatus for locating and focusing waves

(30) Priorité: 08.02.1989 FR 8901628
(43) Date de publication de la demande: 22.08.1990
(73) Titulaire: UNIVERSITE PARIS VII, F-75251 Paris Cedex 05 (FR)
(72) Inventeur: Fink, Mathias, F-92190 Meudon (FR)
(74) Mandataire: Fort, Jacques

(56) Documents cités:
- US-A- 4 526 168
- IEEE 1987 ULTRASONICS SYMPOSIUM PROCEEDINGS, Denver, Colorado, 14-16 octobre1987, vol. 2, pages 863-866, IEEE, New York, US; M. IBBINI et al.: "Ultrasoundphased arrays for hyperthermia: New techniques based on the field conjugationmethod"

## Description

L'invention a pour objet un procédé et un dispositif de repérage et de focalisation d'ondes sonores (ce terme devant être pris dans un sens général, sans limitation aux fréquences audibles) sur des objets présentant une impédance acoustique nettement différente de celle de leur milieu environnant. Parmi de tels objets, on peut citer des objets solides en milieu marin ou dans les sédiments tapissant le fond de masses d'eau, les cavités proches de la surface de la terre. On peut également citer, à titre d'application particulièrement importante, le repérage et la destruction de calculs dans les tissus, notamment le rein, la vésicule, la vessie ou l'urètre, ainsi que la détection et le répérage de failles, criques, fissures et hétérogénéités dans des matériaux variés tels que métaux composites et céramiques.

On connaît déjà des dispositifs lithotripteurs comportant un générateur d'ultrasons dont l'émetteur est constitué par une matrice rectangulaire ou circulaire de transducteurs excitée de façon à créer un champ ultrasonore focalisé sur la position supposée du calcul. Un tel dispositif est également connu du document "IEEE 1987 Ultrasonics Symposium Proceedings, Denver, Colorado, 14 - 16 Oct. 1987, Vol.2, p.863-866, IEEE New York, US; M.Ibbine et al.: "Ultrasound phased arrays for hyperthermia: new techniques based on the field conjugation method."

Mais, du fait de l'hétérogénéité acoustique des tissus, la simple connaissance de la position géométrique d'un calcul, obtenue par exemple par radiographie, ne permet pas de déterminer les décalages temporels entre impulsions d'excitation des transducteurs ou la répartition dans l'espace de ces transducteurs qui provoque une focalisation exactement centrée sur le calcul. Cela conduit à utiliser des faisceaux dont la tache focale est relativement large, souvent de l'ordre du centimètre carré. Pour obtenir les densités d'énergie suffisantes pour détruire les calculs, il faut utiliser des sources puissantes, encombrantes et coûteuses. Et l'imprécision du centrage fait qu'on risque de léser par chauffage les tissus avoisinant le calcul, d'autant plus qu'il peut y avoir un déplacement du calcul entre l'instant de localisation et l'instant d'application du faisceau de destruction.

On pourrait penser que ce problème peut être écarté en utilisant un dispositif lithotripteur qui comporte de plus des moyens permettant de former, à l'aide de la matrice de transducteurs, une image échographique (US-A-4 526 168). Mais, dans la pratique, cette adjonction ne résout pas le problème car la simple application, aux différents transducteurs, d'impulsions d'excitation avec la même répartition de retards que celle qui correspond à la focalisation d'un calcul repéré ne permet pas de concentrer l'ensemble de l'énergie apportée sur le calcul, qui a des dimensions finies et une forme souvent irrégulière.

L'invention telle que définie dans les revendications indépendantes vise à fournir un procédé et un dispositif permettant tout à la fois de focaliser le faisceau ultrasonore sur un objet de forte réflectivité, tel qu'un calcul, de façon précise et de réaliser une auto-adaptation de cette focalisation à la forme et à la position du calcul lui-même, éventuellement dans un but de destruction, quelle que soit la forme d'interface ou d'interfaces entre la matrice de transducteurs et les objets à repérer.

Pour cela, l'invention fait usage d'une technique qu'on peut qualifier d'amplification ultrasonore à conjugaison de phase, par analogie avec les miroirs à conjugaison de phase en optique. Cette technique permet de constituer, à partir d'une onde ultrasonore incidente qui diverge à partir d'une source, une onde convergente qui suit exactement le tracé inverse, les distorsions éventuelles se compensant. Pour cela on reçoit l'onde divergente sur une matrice de détecteurs, on retourne temporellement les signaux reçus en ce qui concerne leur forme et leur échelonnement dans le temps (c'est-à-dire qu'on retourne leurs lois de variation dans le temps et on inverse leur ordre) et on émet les informations ainsi retournées à l'aide de la matrice. La source sera, dans la pratique, toujours une source secondaire, réfléchissant ou diffusant un faisceau qu'elle reçoit. Cette source est par exemple :
- un calcul réfléchissant un faisceau reçu d'une matrice de transducteurs d'illumination, une tumeur de petite taille, imprégnée d'un agent de contraste, ce qui permet par exemple de faire de l'hyperthermie ultrasonore,
- un défaut dans un matériau,
- une cavité de petite taille dans le sol, proche de la surface.

Une illumination initiale de la zone où est susceptible de se trouver l'objet fera apparaître le pourtour de ce dernier, s'il présente une impédance acoustique différente de celle du milieu environnant, comme une source.

En conséquence l'invention propose un procédé suivant lequel :
(a) on illumine, à l'aide d'un faisceau non focalisé, une zone dans laquelle se trouve un objet réfléchissant à repérer et éventuellement à détruire,
(b) on capte le signal d'écho reçu par chacun des transducteurs d'une matrice et on mémorise sa forme et sa position dans le temps, et
(c) on applique à chacun des transducteurs des signaux d'activation obtenus par retournement temporel de la répartition et de la forme des signaux d'écho.

Le procédé permet notamment d'intensifier progressivement des échos originairement faibles.

Une solution avantageuse consiste à utiliser une fraction ou la totalité de la matrice de transducteurs pour illuminer la zone au cours de l'étape (a) ci-dessus, au lieu de moyens distincts.

Le procédé est susceptible d'être mis en oeuvre par itération, en répétant une séquence constituée par les étapes (b) et (c) ci-dessus, après une première illumination de la zone d'intérêt dans laquelle on recherche la présence d'un objet de réflectivité plus forte que la réflectivité moyenne de l'environnement. Chaque retournement temporel de l'écho renforce le rapport entre l'énergie ré-émise à partir de l'objet de plus forte réflectivité et l'énergie ré-émise par des irrégularités locales éventuelles.

L'étape finale du procédé peut être constituée par une simple opération d'enregistrement et/ou de visualisation du front d'onde. Dans l'application de l'invention à la destruction des calculs, on peut effectuer ensuite une destruction par envoi d'énergie ultrasonore, à l'aide de la même matrice, ou d'une autre matrice mieux adaptée à la fourniture d'une énergie élevée, reproduisant le front d'onde enregistré et/ou représenté. Dans ce cas, une fois le front d'onde final enregistré, il sera souvent suffisant de conserver seulement l'échelonnement dans le temps du premier maximum reçu en retour par chacun des transducteurs de la matrice et d'exciter la matrice de transducteurs de destruction en respectant simplement cet échelonnement dans le temps, après retournement, sans se soucier des lobes secondaires du signal reçu et mémorisé sous forme numérique. L'identification du maximum de chaque signal et sa localisation dans le temps ne posent aucun problème, car il existe des techniques numériques bien connues pour atteindre ce résultat, utilisant des corrélateurs analogiques ou numériques maintenant dans le commerce. Dans certains cas, il peut cependant être avantageux de déterminer la fonction de retard à respecter, en évaluant les intercorrélations entre les couples de signaux.

Une autre solution encore consiste à utiliser, pour la destruction, une électronique distincte de l'électronique de localisation, mais utilisant les informations mémorisées au cours de la localisation, la matrice utilisée restant par contre la même.

Au cours de l'étape (c) de la dernière séquence, on adopte alors un gain d'amplification tel que l'on provoque la destruction du calcul, l'énergie émise au cours des étapes de localisation pouvant être faible.

Il est important de remarquer que le procédé qui vient d'être décrit adapte exactement la forme d'onde émise pour détruire le calcul à la forme de ce dernier, puisque la répartition temporelle des signaux appliqués aux transducteurs et la forme de ces signaux reflètent exactement l'aspect du calcul.

Le procédé tel qu'il a été défini jusqu'ici permet de focaliser un faisceau ultrasonore sur l'objet de réflectivité maximale dans un milieu (ou sur plusieurs objets fortement réfléchissants et écartés les uns des autres). Cette focalisation, si elle est utilisée pour une visualisation, fait disparaître les objets de réflectivité moindre, masqués par l'objet (ou les objets) de réflectivité maximale. Il est souvent utile, une fois localisé un objet très fortement réflectif, de repérer des objets moins réfléchissants, masqués par l'objet principal au cours du processus initial de focalisation.

Pour cela, il est proposé un procédé comportant, après une première séquence de focalisation telle que mentionnée plus haut, une nouvelle séquence au cours de laquelle :
(a1)- on illumine, à l'aide d'un faisceau non focalisé, ladite zone où se trouve l'objet réfléchissant préalablement repéré,
(b1)- on capte le signal d'écho reçu par chacun des transducteurs de la matrice,
(b2)- on soustrait les signaux d'écho reçus par chacun des transducteurs et correspondant au front d'onde final obtenu par focalisation sur l'objet réfléchissant (dernière étape b ci-dessus), lesdits signaux ayant été conservés en mémoire,
(c1)- on applique à chacun des transducteurs des signaux d'activation obtenus par retournement temporel de la répartition et de la forme des signaux provenant de la soustraction.

En répétant les opérations (b1) et (c1) de réception de signal d'écho, de retournement temporel et d'émission, on localise l'objet dont le niveau de réflectivité est immédiatement inférieur à celui de l'objet localisé à l'issue de la première séquence d'opérations.

Cette façon de procéder est relativement simple mais elle n'est pas absolument parfaite : en effet, la localisation finale de l'objet le plus réfléchissant au cours de la première séquence implique un nombre n d'émissions-réceptions par les transducteurs dont la fonction de transfert modifie, à chaque émission-réception, le signal échographique, les modifications se cumulant à chaque itération. Pour écarter l'effet perturbateur ainsi introduit, lorsqu'il est jugé gênant, une solution consiste, lors de la première réception en vue de déterminer l'objet de niveau de réflectivité immédiatement inférieur (étape b1), de soumettre les signaux d'écho reçus par les transducteurs à n opérations de convolution, correspondant chacune à une émission-réception, avant soustraction des signaux d'écho représentant le front d'onde de localisation de l'objet le plus réfléchissant.

Au lieu d'effectuer n convolutions sur le premier front d'onde réfléchi, il est possible d'effectuer n déconvolutions sur le front d'onde mémorisé.

L'invention propose également un dispositif permettant de mettre en oeuvre le procédé ci-dessus défini, comprenant : une matrice de transducteurs ; et, associée à chaque transducteur, une voie de traitement comportant un convertisseur analogique-numérique, une mémoire, un émetteur de puissance programmable commandé par la mémoire, et des moyens de commande de l'émetteur suivant une répartition temporelle inverse de celle qui est mémorisée.

Le dispositif peut être complété par des moyens d'échographie permettant de visualiser les objets échogènes dans la zone d'observation et de sélectionner les objets sur lesquels devra être ultérieurement focalisée l'énergie, par exemple en sélectionnant une fraction seulement des transducteurs mis en oeuvre.

Grâce à la disposition adoptée, l'énergie appliquée aux transducteurs est utilisée dans de bien meilleures conditions que par le passé, surtout dans le cas d'un environnement hétérogène et/ou de frontières irrégulières traversées par l'énergie ultrasonore. En particulier, dans le cas où un objet réfléchissant est de petite taille, la tache focale pourra être réduite au minimum autorisé par la diffraction et qui, pour une fréquence ultrasonore de 1 MHz, est de quelques millimètres carrés. Il n'est pas nécessaire que le positionnement des transducteurs dans la matrice soit très précis, car le retournement temporel rattrape les erreurs de positionnement éventuelles.

L'invention sera mieux comprise à la lecture de la description qui suit de modes particuliers de réalisation, donné à titre d'exemple non limitatif. La description se réfère aux dessins qui l'accompagnent, dans lesquels :
- les Figures 1, 2 et 3 sont des schémas de principe montrant trois phases successives de mise en oeuvre du procédé suivant l'invention ;
- les Figures 2A et 3A sont des chronogrammes montrant un exemple de signaux électriques respectivement provenant des transducteurs (Figure 2A) et appliqués aux transducteurs (Figure 3A) ;
- la Figure 4 est un schéma de principe d'une voie associée à un transducteur dans un dispositif selon l'invention ;
- la Figure 5 est un diagramme montrant les courbes représentatives de la répartition de la pression dans le plan de l'objet lors de la mise en oeuvre de l'invention, à l'issue de la première, de la troisième et de la septième itérations (courbes indiquées par les chiffres 1, 3 et 7) ;
- les Figures 6A et 6B sont des chronogrammes montrant respectivement les signaux d'écho fournis par les transducteurs d'une matrice cylindrique, à la première réflexion sur l'objet-source, et la contribution des transducteurs au champ de pression acoustique appliqué à l'objet-source après le premier retournement,
- la Figure 7 montre une répartition possible de transducteurs dans une matrice de lithotriptie.

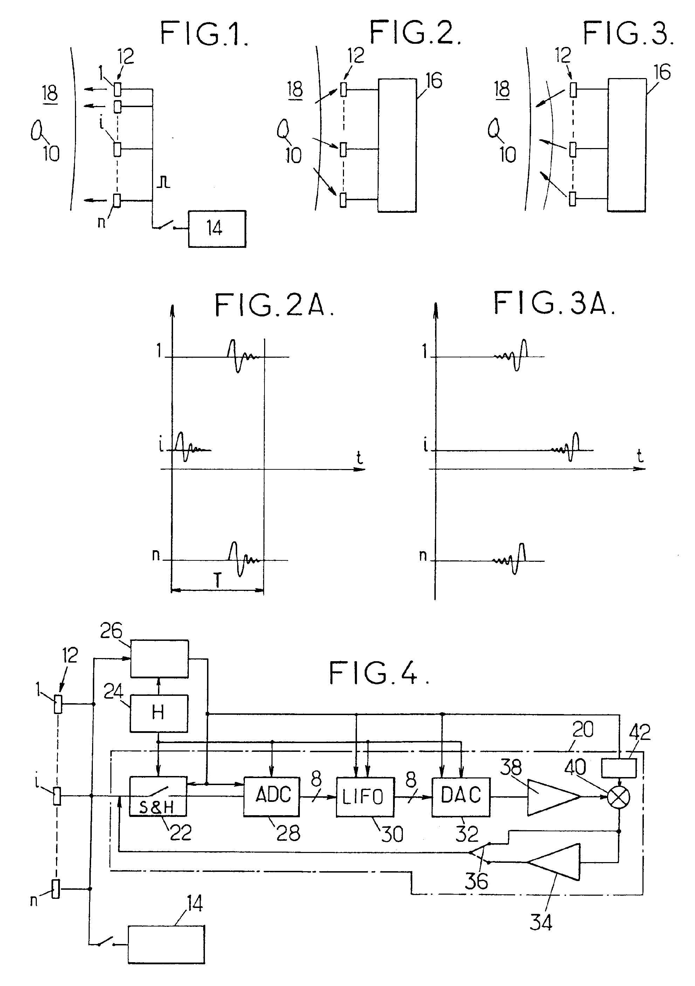

Telle que représentée sur les Figures 1 à 3, la mise en oeuvre du procédé selon l'invention provoque la formation, à partir du champ ultra-sonore réfléchi par une source-objet 10, d'un champ de pression ultrasonore reconvergeant vers l'objet, par une technique de miroir ultrasonore.

L'objet est par exemple un calcul à détruire dans les tissus. Il peut également s'agir d'un défaut dans une pièce.

Au cours d'une première étape, on illumine la zone dans laquelle se trouve l'objet 10 à localiser à l'aide d'un faisceau large non focalisé (Figure 1). Ce faisceau peut être fourni par une matrice 12 de transducteurs ultrasonores 1, 2,..., i,..., n qui sera de nouveau utilisée au cours des étapes suivantes. Ces transducteurs seront souvent répartis suivant une matrice 12 à deux dimensions bien que les Figures montrent les transducteurs répartis selon une ligne, c'est-à-dire une matrice à une seule dimension, pour plus de simplicité. La matrice peut être plane ou être concave, de façon à assurer une pré-focalisation géométrique, notamment lorsque cela devient nécessaire pour détruire la "source" par énergie ultrasonore. Les transducteurs peuvent être de constitution classique et constitués par des plaquettes de céramique piézo-électrique. Il sera souvent avantageux d'utiliser des transducteurs ayant une fréquence centrale de résonance d'environ 500 kHz pour la lithotriptie. Pour des emplois médicaux (localisation et destruction de calculs), la matrice peut par exemple comporter des transducteurs répartis à un pas de 3 à 6 longueurs d'onde si elle est placée sur une surface concave, de 1 à 4 longueurs d'onde dans le cas d'une surface plane. Elle peut être conçue pour être placée à une distance du calcul à détruire comprise entre 100 et 200 mm.

La matrice 12 peut avoir l'une des constitutions générales bien connues à l'heure actuelle, de sorte qu'il n'est pas nécessaire de la décrire davantage.

La matrice 12 est associée à un premier circuit 14 permettant d'exciter les transducteurs par des signaux tels que la matrice fournisse un faisceau non focalisé dirigé vers l'objet 10, qui, du fait de la réflexion sur sa surface, va constituer une source. Dans la pratique, le circuit 14 peut être constitué par un générateur d'impulsion brève attaquant en phase tous les transducteurs.

On peut utiliser, au cours de cette étape, au lieu de la matrice 12, un réseau différent de transducteurs ou une fraction seulement de la matrice.

Au cours d'une seconde étape du procédé, on capte le signal d'écho reçu par les transducteurs 1,..., i,..., n et on mémorise la forme et la position relative dans le temps des signaux, à l'aide d'un circuit 16 (Figure 2) qui peut avoir la constitution qu'on décrira plus loin en faisant référence à la Figure 4. La Figure 2A montre une forme que peuvent prendre les signaux électriques qui apparaissent à la sortie des différents transducteurs et leur échelonnement dans le temps, lorsque le signal électrique d'excitation des transducteurs (Figure 1) est constitué par une impulsion brève.

Au cours de l'étape suivante, les signaux mémorisés sont utilisés pour exciter les transducteurs de la matrice 12 de réception, après retournement temporel de la répartition et de la forme de ces signaux (Figure 3). Dans la mesure où les transducteurs ont une réponse linéaire ou présentent la même caractéristique de réponse à l'émission et à la réception, l'onde formée par l'excitation de la matrice 12 revient se focaliser sur l'objet 10, les distorsions à la traversée du milieu inhomogène éventuel 18 à l'aller (Figure 2) étant exactement compensées par les distorsions sur le trajet de retour. L'onde ultrasonore divergente captée par la matrice 12 (Figure 2) permet de générer une onde convergente (Figure 3) exactement focalisée.

Dans la mesure où l'objet 10 se trouve dans un milieu ne présentant que des réflexions beaucoup plus faibles, la troisième opération qui vient d'être décrite peut déjà être une opération de destruction effectuée avec une très forte amplification du signal. Le gain d'amplification G entre le signal électrique recueilli sur les transducteurs et le signal électrique qui leur est appliqué par le circuit 16 peut par exemple atteindre 10⁵ de façon à fournir l'énergie acoustique nécessaire à la destruction, dans le cas d'un calcul ; la situation est similaire pour les traitements par hyperthermie.

Dans certains cas, un calcul principal à repérer ou à détruire peut être accompagné par des lithiases de petite taille qui donnent naissance à des échos secondaires. Pour permettre de répérer ces échos secondaires et permettre une sélection manuelle, une solution consiste à visualiser les objets qui se trouvent dans le champ de la matrice 12 à l'aide d'échographe classique : dans ce cas, l'opérateur peut repérer sur l'image en échographie B qui lui est présentée, l'objet sur lequel il veut retourner un front d'onde ou des fronts d'onde amplifiés : par exemple, il peut limiter la fenêtre temporelle de sélection par action sur le séquenceur du circuit 16, éventuellement de façon différente sur différents groupes de transducteurs.

Une sélection par opérateur peut souvent être évitée en utilisant un procédé par itération : dans le cas d'un calcul, au lieu d'émettre, après le premier retournement, une onde convergente très amplifiée de destruction, on crée un nouvel écho, à faible puissance, qu'on recueille et amplifie. A chaque répétition de ce processus, pendant une période qu'on peut qualifier de "mode d'attente", les échos secondaires sont progressivement effacés et finalement reste seul stocké le front d'onde correspondant à l'objet qui a la plus forte réflectivité, c'est-à-dire le calcul. A l'issue du mode d'attente, la dernière émission à partir des transducteurs de la matrice 12 est très amplifiée pour détruire le calcul.

Le circuit 16 peut avoir la constitution montrée schématiquement en Figure 4, où une seule voie, 20, associée au transducteur d'ordre i, est représentée. Chaque voie peut comporter un échantillonneur 22 destiné à fournir des échantillons analogiques du signal reçu par le transducteur i à la fréquence d'une horloge 24 (3 à 10 MHz en général) pendant des intervalles de temps fixés par un cadenceur 26 et de durée T suffisante pour que l'écho soit reçu par tous les transducteurs (Figure 2A). L'échantillonneur 22 est suivi d'un convertisseur analogique/numérique 28. Il suffit en général d'une conversion sur huit bits pour représenter de façon satisfaisante la dynamique des échos. Les octets représentatifs chacun d'un échantillon sont mémorisés dans une mémoire 30 organisée en pile d'attente (du type dernier entré-premier sorti) de capacité suffisante pour stocker tous les échantillons reçus pendant la durée T : le retournement temporel n'est effectué que sur cette durée T.

Le cadenceur 26 est prévu de façon à provoquer le début de l'échantillonnage au bout d'un temps déterminé après excitation par le générateur 14, une telle estimation étant facile à effectuer à partir de la connaissance de la vitesse de propagation des ultrasons dans le milieu.

Le cadenceur 26 est également prévu de façon à provoquer l'émission du front d'onde retourné au bout d'un temps bref τ après fin de l'écho. Il est en effet souhaitable que ce temps soit bref (quelques millisecondes par exemple) pour que ni le milieu, ni la position de l'objet ne se soient modifiés entre l'aller et le retour.

Pour permettre l'émission d'un front d'onde retourné, chaque voie 20 comprend un convertisseur numérique/analogique suivi d'un amplificateur 34 de gain élevé pouvant être mis en service ou hors service par un interrupteur 36 (qui peut être remplacé par une commande de gain d'amplificateur). La sortie de l'interrupteur 36 attaque le transducteur respectif i.

Dans le mode de réalisation illustré sur la Figure 4, chaque voie comprend également un amplificateur 38, de gain faible par rapport à celui de l'amplificateur 34, suivi d'un atténuateur 40 dont le rôle est de compenser les variations d'atténuation suivant la profondeur de l'objet. Le coefficient d'atténuation de l'atténuateur 40 est modifié, en fonction du temps, par un programmateur 42 dans lequel est mémorisée une fonction inverse de l'exponentielle négative d'absorption dans le milieu traversé. Le cadenceur 26 est prévu pour initialiser le programmateur 42 qui, au fur et à mesure que le temps s'écoule, réduit l'atténuation subie par le signal sortant de l'amplificateur 38.

On voit que, sur une voie où le champ de pression ultrasonore instantané appliqué au transducteur est de la forme p(x,y,t), la contribution du transducteur au champ de pression ultrasonore appliqué à l'objet 10 sera de la forme p(x,y,τ-t), où τ est un instant arbitraire, mais déterminé, situé au-delà de la fenêtre temporelle d'observation.

Comme on l'a indiqué plus haut, les étapes illustrées sur les Figures 2 et 3 peuvent être parcourues plusieurs fois avant l'étape finale à amplification élevée. Il est important de relever que le fonctionnement est itératif à tous les stades : le premier tir (Figure 1) illumine grossièrement la zone intéressante et permet de déceler la présence de tout objet de réflectivité plus forte que la réflectivité moyenne de l'environnement. Le premier retournement temporel (Figures 2 et 3) de l'écho renforce l'énergie sur l'objet de forte réflectivité et le faisceau retourné éclaire de façon préférentielle cet objet. S'il y a des itérations successives, au cours desquelles le faisceau s'adapte d'autant plus vite que le rapport entre la réflectivité de la "source" constituée par l'objet et la réflectivité moyenne de l'environnement est élevé, le front d'onde s'ajuste exactement sur la discontinuité que représente la frontière de la "source". Si l'objet bouge pendant l'opération, le retournement temporel adapte chaque fois le champ de pression à la nouvelle position réelle de l'objet, c'est-à-dire réalise une poursuite des échos.

L'invention est susceptible de nombreuses variantes de réalisation. En particulier, il est possible de constituer les voies de façon analogique et non plus numérique. Dans ce cas, le convertisseur analogique/numérique d'entrée, la mémoire vive organisée en pile d'attente et le convertisseur numérique/analogique de sortie sont remplacés par un circuit analogique capable de stocker l'onde reçue sous forme analogique et de la restituer sous forme retournée. On connaît à l'heure actuelle des composants à état solide, à onde de surface, permettant une telle mémorisation et un retournement. Chaque composant peut notamment être constitué par un substrat de silicium portant un premier composant à onde de surface destiné au stockage, un multiplieur de modulation par une onde haute fréquence et un second composant à onde de surface de restitution.

Le procédé et le dispositif qui viennent d'être décrits sont utilisables non seulement lorsqu'il est prévu une étape finale de destruction, par concentration d'énergie ultrasonore, mais aussi dans le cas où l'on se borne à une localisation, éventuellement en effectuant ultérieurement une destruction.

L'exemple donné ci-après fait apparaître les résultats favorables donnés par l'invention. Les trente-deux transducteurs émetteurs-récepteurs utilisés pour l'expérience étaient répartis sur un secteur de cylindre dont l'axe est parallèle à deux fils dont l'un a un diamètre double de celui de l'autre. La distance entre les transducteurs et la ligne médiane entre les deux fils était de 80 mm. L'expérience était effectuée dans un liquide et la répartition d'énergie dans le plan des deux fils était mesurée, pour chaque tir, à l'aide d'un hydrophone déplacé dans le plan des deux fils et sensible à la pression ultrasonore p.

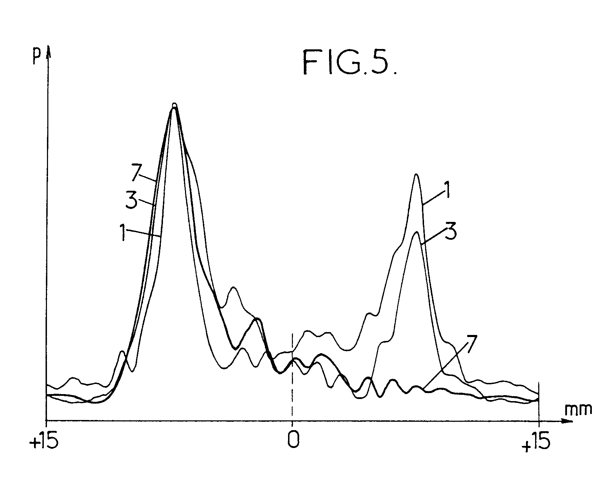

Sur la Figure 5, où la pression acoustique p est donnée en ordonnées, on voit que dès la première itération (c'est-à-dire dès la première ré-émission après retournement temporel), l'énergie renvoyée vers le fil de grand diamètre est plus importante que vers le fil de petit diamètre. La différence d'énergie est encore plus nette à la troisième itération. A la septième itération, toute l'énergie est pratiquement concentrée sur le fil de grand diamètre et l'autre fil n'apparaît plus.

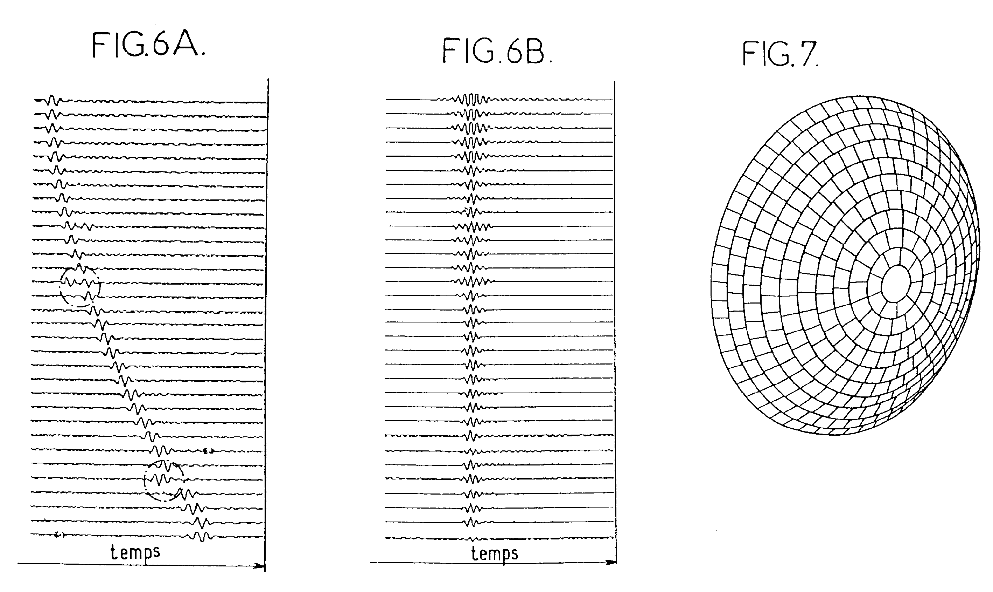

La même expérience effectuée avec une matrice linéaire de transducteurs dont certains présentent des imperfections a montré que le résultat favorable est conservé, ce qui fait apparaître l'intérêt supplémentaire de l'invention. La figure 6A montre l'échelonnement dans le temps et la forme des signaux d'échos revenant vers les transducteurs d'une matrice similaire à celle de l'exemple précédent. On constate que deux des transducteurs donnent naissance à des signaux comportant des imperfections, indiquées par des cercles en traits mixtes. Le retournement temporel corrige ces imperfections du réseau de transducteurs : la figure 6B montre le signal de pression acoustique relevé par un hydrophone déplacé dans un plan orthogonal au plan médian de la matrice. On constate que les imperfections qui apparaissent sur la figure 6A ont disparu et que les signaux arrivant sur l'objet-source sont exactement en phase.

Comme on l'a indiqué plus haut, les transducteurs peuvent être répartis suivant des matrices de nature très diverse. La Figure 7 montre par exemple une matrice comprenant plus de cent transducteurs. La localisation par la séquence de retournements temporels s'effectue avantageusement en ne mettant en oeuvre qu'un transducteur sur m (m étant par exemple égal à 5). Cela permet de réduire le nombre de voies de retournement temporel et donc le coût du dispositif. Pour la destruction, on met en oeuvre tous les transducteurs. Pour les transducteurs qui n'ont pas été utilisés pour le repérage, l'instant d'excitation est calculé par interpolation à partir des transducteurs de repérage voisins. Les formes d'onde à leur appliquer peuvent elles aussi être déduites, par interpolation, des formes d'onde appliquées aux transducteurs de localisation adjacents.

## Revendications

1. Procédé de focalisation d'un faisceau ultrasonore sur un objet réfléchissant dans un milieu, caractérisé en ce que :
(a) on illumine, à l'aide d'un faisceau non focalisé, une zone dans laquelle se trouve l'objet réfléchissant(10),
(b) on capte le signal d'écho reçu par des transducteurs d'une matrice et on mémorise sa forme et sa position dans le temps, et
(c) on applique aux transducteurs des signaux d'activation obtenus par retournement de la répartition dans le temps et de la forme des signaux d'écho.

2. Procédé selon la revendication 1, caractérisé en ce qu'on illumine la zone au cours de l'étape (a) à l'aide d'une fraction ou de la totalité des transducteurs de la matrice.

3. Procédé selon la revendication 1 ou 2, caractérisé en ce qu'on répète la séquence des étapes (b) et (c).

4. Procédé selon la revendication 3, caractérisé en ce qu'on enregistre, pour utilisation ultérieure, au moins la répartition dans le temps des signaux à l'issue de la dernière étape (c) de la séquence.

5. Procédé selon la revendication 4, caractérisé en ce qu'on mémorise la répartition dans le temps des maxima des signaux.

6. Procédé selon la revendication 4, caractérisé en ce qu'on détermine, par intercorrélation entre les couples de signaux, l'échelonnement dans le temps de ces signaux pour utilisation ultérieure.

7. Procédé selon la revendication 4, caractérisé en ce que, pour localiser un second objet de réflectivité immédiatement plus faible que celle du premier :
- on illumine, à l'aide d'un faisceau non focalisé, ladite zone où se trouve l'objet réfléchissant préalablement repéré,
- on capte le signal d'écho reçu par chacun des transducteurs de la matrice,
- on soustrait les signaux d'écho, conservés en mémoire, reçus par chacun des transducteurs et correspondant au front d'onde final obtenu par focalisation sur l'objet réfléchissant,
- on applique à chacun des transducteurs des signaux d'activation obtenus par retournement temporel de la répartition et de la forme des signaux provenant de la soustraction.

8. Dispositif de mise en oeuvre du procédé selon la revendication 1, caractérisé en ce qu'il comprend une matrice (12) de transducteurs ; et, associée à chaque transducteur, une voie de traitement comportant un convertisseur analogique-numérique (28), une mémoire (30), un émetteur de puissance programmable commandé par la mémoire(34), et des moyens (30, 32) de commande de l'émetteur suivant une répartition temporelle inverse de celle qui est mémorisée.

9. Dispositif de mise en oeuvre du procédé selon la revendication 1, caractérisé en ce qu'il comprend une matrice (12) de transducteurs ; et, associée à chaque transducteur, une voie de traitement comportant des moyens de mémorisation analogique de forme d'onde et de restitution de la forme d'onde après retournement dans le temps.

10. Dispositif selon la revendication 8 ou 9, caractérisé en ce que la matrice comprend, en plus des transducteurs associés chacun à une voie de traitement, des transducteurs supplémentaires et en ce que la matrice de transducteurs est associée à des moyens de commande d'émetteurs reliés chacun à un des transducteurs, suivant une répartition temporelle obtenue par retournement dans le temps pour ce qui est des transducteurs comportant une voie de traitement, et suivant une répartition temporelle obtenue par interpolation pour les autres transducteurs.

11. Dispositif selon la revendication 8, 9 ou 10, caractérisé en ce qu'il comporte de plus des moyens d'échographie permettant de visualiser les objets échogènes dans la zone d'observation et des moyens permettant de sélectionner certains seulement des transducteurs pour focaliser l'énergie sur un objet particulier.

## Patentansprüche

1. Verfahren zum Focussieren eines Ultraschallbündels auf ein reflektierendes Objekt in einer Umgebung,
dadurch gekennzeichnet,
daß (a) man mit Hilfe eines nicht focussierten Bündels eine Zone bestrahlt, in der sich das reflektierende Objekt (10) befindet,
(b) man das von den Wandlern einer Matrize erhaltene Echosignal auffängt und seine Form und seine Position in der Zeit speichert und
(c) man auf die Wandler Aktivierungssignale anwendet, die man durch Umkehrung der Verteilung in der Zeit und der Form der Echosignale erhalten hat.

2. Verfahren gemäß Anspruch 1,
dadurch gekennzeichnet,
daß man die Zone im Laufe des Schrittes (a) mit Hilfe eines Teils oder der Gesamtheit der Wandler der Matrize bestrahlt.

3. Verfahren nach einem der Ansprüche 1 oder 2,
dadurch gekennzeichnet,
daß man die Abfolge der Schritte (b) und (c) wiederholt.

4. Verfahren nach Anspruch 3,
dadurch gekennzeichnet,
daß zur späteren Verwendung wenigstens die Verteilung der Signale in der Zeit am Ende des letzten Schrittes (c) der Abfolge gespeichert wird.

5. Verfahren nach Anspruch 4,
dadurch gekennzeichnet,
daß man die Verteilung der Maxima der Signale in der Zeit speichert.

6. Verfahren nach Anspruch 4,
dadurch gekennzeichnet,
daß man durch Interkorrelation zwischen den Signalpaaren die Staffelung dieser Signale in der Zeit zur späteren Verwendung bestimmt.

7. Verfahren nach Anspruch 4,
dadurch gekennzeichnet,
daß zur Lokalisierung eines zweiten, unmittelbar viel schwächeren reflektierenden Objektes als das erste man mit Hilfe eines nicht focussierten Bündels die besagte Zone, in der sich das reflektierende, zuvor geortete Objekt befindet, bestrahlt,
man das durch jeden der Wandler der Matrize empfangene Echosignal auffängt,
man die in einem Speicher bewahrten Echosignale subtrahiert, die man von jedem der Wandler und korrespondierend zur Front des Wellenendes durch Focussierung auf das reflektrierende Objekt erhalten hat,
man auf jeden der Wandler Aktivierungssignale anwendet, die man durch zeitweise Umkehrung der Verteilung und der Form der durch die Subtraktion entstandenen Signale erhalten hat.

8. Vorrichtung zur Durchführung des Verfahrens nach Anspruch 1,
gekennzeichnet durch
eine Matrize von Wandlern und eine mit jedem Wandler verbundene Verarbeitungsbahn mit einem analog-numerischen Konverter (28), einem Speicher (30), einem elektrischen, programmierbaren, vom Speicher (34) gesteuerten Leistungssender und mit Mitteln (30,32) zur Steuerung des Senders gemäß einer zur gespeicherten Verteilung umgekehrten zeitlichen Verteilung.

9. Vorrichtung zur Durchführung des Verfahrens nach Anspruch 1,
gekennzeichnet durch
eine Matrize (12) von Wandlern und eine mit jedem Wandler verbundene Verarbeitungsbahn, die analoge Speichermittel für die Wellenform und die Wiederherstellung der Wellenform nach Umkehrung in der Zeit aufweist.

10. Vorrichtung nach Anspruch 8 oder 9,
dadurch gekennzeichnet,
daß die Matrize zusätzlich zu den jeweils mit einer Verarbeitungsbahn verbundenen Wandlern zusätzliche Wandler aufweist und daß die Wandlermatrize mit Mitteln zur Steuerung der jeweils mit einem der Wandler verbundenen Sender gemäß einer zeitlichen Verteilung, die durch die Umkehrung in der Zeit erhalten wird, welche für die eine Verarbeitungsbahn aufweisenden Wandler ist, und gemäß einer zeitlichen Verteilung verbunden ist, die durch Interpolation für die anderen Wandler erhalten wird.

11. Vorrichtung nach den Ansprüchen 8, 9 oder 10,
dadurch gekennzeichnet,
daß diese außerdem Echographiemittel umfaßt, die es erlauben, die echogebenden Objekte in der Überwachungszone zu visualisieren, und weitere Mittel aufweist, die es erlauben, nur bestimmte Wandler auszuwählen, um die Energie auf ein besonderes Objekt zu focussieren.

## Claims

1. A process for focussing a ultrasonic beam on a reflective object in an environment, characterized by the steps of:
(a) illuminating a zone where the object is located with a non-focussed beam,
(b) sensing the echo signal received by transducers of an array and storing its shape and its distribution in time,
(c) applying, to the transducers, energizing signals obtained by reversing the distribution in time and the shapes of the echo signals.

2. Process according to claim 1, characterized by illuminating the zone with some or all of the transducers of the array during step (a).

3. Process according to claim 1 or 2, characterized in that the sequence of steps (b), (c) and (d) is repeated.

4. Process according to claim 3, characterized in that at least the time distribution of the signals is stored at the end of the last step (c) of the sequence for later use.

5. Process according to claim 4, characterized in that the time distribution of maximum values of the signals is stored.

6. Process according to claim 4, characterized in that the time distribution of the signals is determined by a cross-correlation between couples of signals, for later use.

7. Process according to claim 4, for locating a second object which has a reflectivity directly lower than that of the first object, characterized by:
illuminating said zone including the previously located reflective object, with a non-focussed beam;
sensing the echo signal received by each of the transducers of the array;
subtracting the stored echo signals received by each of the transducers and corresponding to the final wave front obtained by focussing on the reflective object;
applying said further reversed signals, to each of the transducers of said array, energizing signals obtained by reversing the time distribution and the shapes of the signals which results from the subtraction.

8. Device for implementing the process of claim 1, characterized in that it comprises an array (12) of transducers; and, associated with each transducer, a processing channel comprising an analog-digital converter (28), a memory (30), a programmable power transmitter controlled by the memory (34), and means (30,32) for controlling the transmitter according to a time distribution which is inverted with respect to the stored distribution.

9. Device for implementing the process of claim 1, characterized in that it comprises an array (12) of transducers; and, associated with each transducer, a processing channel comprising means for analog storage of wave shaped and for delivering back the wave shape after it has been time reversed.

10. Device according to claim 8 or 9, characterized in that the array comprises, in addition to the transducers each associated with a processing channel, additional transducers, and in that the transducer array is associated with transmitter control means each connected to one of the transducers, according to a time distribution which is obtained by time reversal as regards the transducers which comprise a processing channel, and according to a time distribution obtained by interpolation for the other transducers.

11. Device according to claim 8 or 10, characterized in that it further comprises echography means for displaying the echo generating objects in the visualization zone and means for selecting only some of the transducers for focussing energy on one particular object.
